# EUROPEAN PATENT APPLICATION

(11) **EP 4 663 393 A1**
(43) Date of publication of application: **17.12.2025**
(21) Application number: 24182282.4
(22) Date of filing: 14.06.2024
(51) Int. Cl.: B29C 70/52, B29D 99/00, B29L 31/08

(54) **METHOD AND APPARATUS FOR MANUFACTURING REINFORCEMENT PROFILES WITH VARIABLE CROSS-SECTIONAL GEOMETRY**

(71) Applicant: Dencam Composite A/S, 5900 Rudkøbing (DK)
(72) Inventor: Baviloliaei, Mahdi, 5900 Rudkøbing (DK)
(74) Representative: Patrade A/S

(57) **Abstract**

Method for manufacturing reinforcement profiles (110) having variable profile cross-sectional geometry (112), the method comprises a step of
- passing two or more fabric layers (120) with a polymer through a heated die (10) to consolidate the two or more fabric layers (120) and polymer into a reinforcement profile (110), the heated die (10) having a die cross-sectional geometry (12) providing the reinforcement profile (110) with a profile cross-sectional geometry (112); and
- varying the die cross-sectional geometry (12) to vary the profile cross-sectional geometry (112) along the reinforcement profile (110).

## Description

### Field of the Invention

The present invention relates to a method and apparatus for manufacturing reinforcement profiles with variable cross-sectional geometry.

The present invention furthermore relates to a method and apparatus for manufacturing reinforcement profiles for wind turbine blades.

### Background of the Invention

Pultrusion is a process for continuous manufacturing fibre-reinforced materials with a constant cross-sectional geometry. The fibre-reinforced materials are widely used in a variety of industries such as the construction industry for glass-fibre reinforcement, profiles, carcasses; the aerospace industry for structure component of aircraft; the automotive industry for structural parts of vehicles; and in the wind turbine industry for profiles for the manufacture of wind turbine blades.

In the pultrusion process, fibre rovings are saturated with thermosetting resin and passed through a heated die that cures the thermosetting resin and provides a final product with a constant cross-sectional geometry following the shape of the die.

The fibre-reinforced materials are often used as reinforcements for non-uniform structures that does not have a constant cross-sectional geometry, such as wind turbine blades and aeroplane wings. Because the cross-sectional geometry of the fibre-reinforced materials is unchangeable during production, the fibre-reinforced materials are manufactured modularly. Accordingly, multiple modules of fibre-reinforced materials with different constant cross-sectional geometries need to be produced one by one and then manually assembled to match the shape of a non-uniform structure. This is expensive, time consuming, and unsustainable, because it generates a significant amount of waste material.

There is therefore a need in the art for a process for manufacturing fibre-reinforced materials enabling the cross-sectional geometry of the fibre-reinforced materials to be changed during production, such that fibre reinforced materials matching the shape of non-uniform structures can be produced in one continuous piece.

### Object of the Invention

One objective of the present disclosure is to provide a process and apparatus for manufacturing reinforcement profiles with variable cross-sectional geometry, where the cross-sectional geometry can be changed during production, thereby providing a cost efficient, effective, and sustainable production of reinforcement profiles.

It is further an objective of the present invention to provide a cost efficient, effective, and sustainable process for manufacturing reinforcement profiles for the manufacture of wind turbine blades.

### Description of the Invention

One objective of the invention is achieved by a method for manufacturing reinforcement profiles having variable profile cross-sectional geometry. The method comprises a step of:
- passing two or more endless fabric layers with a polymer through a heated die to consolidate the two or more fabric layers and polymer into a reinforcement profile, the heated die having a die cross-sectional geometry providing the reinforcement profile with a profile cross-sectional geometry; and
- varying the die cross-sectional geometry to vary the profile cross-sectional geometry along the reinforcement profile.

Thereby providing reinforcement profiles with variable profile cross-sectional geometry.

The method enables that the cross-sectional geometry of the reinforcement profiles can be changed during production, and thereby enabling the production of continuous reinforcement profiles that matches the geometry of non-uniform structures.

This is advantageous over prior manufacturing methods, as the method of the present invention circumvents the need for manufacturing the reinforcement profiles in modules with different constant cross-section geometries in order to match the geometry of a non-uniform structure to be reinforced. The modular manufacture of reinforcement profiles is expensive, time consuming, inefficient, and unsustainable, because the modules must be produced one at the time and subsequently assembled manually to a complete reinforcement profile, which generates a lot of waste material. In comparison, the method of the present invention is cost effective, fast, efficient, and sustainable, as a complete reinforcement profile can be produced in one continuous piece during one production run and directly mounted on a structure to be reinforces, which generates less waste material.

By the term "fabric" is meant any fabric or fibre suitable for manufacturing fibre-reinforced polymers (also called fibre-reinforced polymers). The term "fabric" is therefore interchangeable with the term "fibre". This interpretation applies throughout the specification.

By the term "reinforcement profiles" is meant a strand of a fibre-reinforced polymer having a cross-sectional geometry, which may be multi layered fabrics, multi layered rovings, multi layered tows, multi layered ropes, or fibre-reinforced polymers. This interpretation applies throughout the specification.

The method is a method for manufacturing continuous reinforcement profiles, wherein the two or more fabric layers are continuous fabric strands being passed through a heated die, thereby forming a continuous reinforcement profile. The heated die may encompass a part of the two or more fabric layers at a time, thereby heating the encompassed part of the two or more fabric layers to consolidate the two or more fabric layers and polymer into a reinforcement profile.

By the term "a polymer" is meant one polymer or a combination of polymers. Thus, the term "a polymer" should be understood as one or more polymers, and the same applies for the definite form "the polymer". This interpretation applies throughout the specification.

The heated die heats the two or more fabric layers to consolidate the two or more fabric layers and polymer into a reinforcement profile, thereby at least partially melting and/or polymerizing the polymer to unite the two or more fabric layers and polymer into one reinforced material. The consolidation of the two or more fabric layers and polymer, thus, provide a reinforcement profile with a stiffness that is high enough for the reinforcement profile to maintain its shape and preferably for running a vacuum infusion of the reinforcement profile without the need of a mould.

In an embodiment of the method, the method may further comprise a step of running a vacuum infusion of the reinforcement profile, wherein an infusion resin is driven into the reinforcement profile by a vacuum pressure. The vacuum infusion enables a high fibre-to-resin ratio, thereby improving the mechanical properties and obtaining a high mechanical performance of the reinforcement profile.

Thus, the amount of polymer applied to the two or more fabric layers should be sufficient for consolidating the two or more fabric layers and polymer to a reinforcement profile with a stiffness that is high enough for the reinforcement profile to maintain its shape but still low enough to enable a vacuum infusion. A too high amount of polymer can be problematic for running a vacuum infusion, as the polymerized and/or consolidated polymer resulting from the passing through the heated die may prevent an infusion resin from being driven into the reinforcement material during the vacuum infusion process.

The two or more fabric layers may be applied 1 to 10% or 1 to 7% or preferably 1 to 5% polymer, thereby applying a sufficient amount of polymer to the two or more fabric layers, for consolidating the two or more fabric layers and polymer to a stiffness that enables running a vacuum infusion of the reinforcement profile, without the need of a mould.

In another embodiment of the method, the reinforcement profile leaving the heated die may be a finished ready-to-use reinforcement profile. Thereby, the reinforcement structure can be directly applied for the intended use.

The two or more fabric layers may be 2 to 12 fabric layers, preferably 2 to 8 fabric layers, and more preferably 2 to 6 fabric layers. The number of fabric layers depend on the fabric material and polymer and should be chosen such that a stable reinforcement profile with the required mechanical properties, such as stiffness and strength, for either ready-to-use reinforcement profiles or running a subsequent vacuum infusion.

The fabric material of the two or more fabric layers may be glass, fibreglass, carbon, aramid, basalt, paper, wood, boron, asbestos, or any combination thereof. Preferably, the fabric material is glass or carbon or a combination of these.

The fabric layers may be off-the-shelf fabrics supplied with a polymer; or the fabrics may be applied a polymer before passing through the heated die; or the fabric layers may be off-the-shelf fabrics supplied with a polymer and applied an additional polymer before passing through the heated die.

The polymer may be thermosetting polymers, thermoplastic polymers, adhesives, epoxy resin, vinyl ester, polyester thermosetting plastic, phenol formaldehyde resins, thermoplastic powder binder, thermoplastic resins or thermoplastic resin systems, or any combination thereof. Preferably the polymer is a thermoplastic powder binder and/or an adhesive and/or an epoxy resin.

The thermoplastic resin system may be a thermoplastic resin sold under the trademark name Elium^{®}.

The heated die may heat the two or more fabric layers and polymer to a temperature of 70-180°C or 80-120°C or 90-110°C or preferably about 100°C but is not limited to these temperatures. The temperature required for consolidating the two or more fabric layers and polymer depends on the type of polymer, the amount of polymer, the number of fabric layers, and the fabric speed. The temperature should be sufficient for at least partially melting and/or polymerizing the polymer.

The two or more fabric layers may be passed through the heated die at a fabric speed of 0.2 to 5 meter per minutes or 0.3 to 2 meter per minute or 0.4 to 1 meter per minute.

The heated die may further be configured for compressing the two or more fabric layers and polymer to a thickness. The thickness may be 1-10 mm or 2-8 mm or 2-7 mm or 2-6 mm.

With the above-mentioned parameters, the present invention provides a method for manufacturing reinforcement profiles with different mechanical properties such as rigidity, strength, and elasticity, and thereby provide reinforcement profiles suitable for various applications.

The step of varying the die cross-sectional geometry may be a step of gradually varying the die cross-sectional geometry, thereby obtaining a reinforcement profile with a profile cross-sectional geometry that gradually varies along the reinforcement profile.

The heated die may have a die cross-sectional geometry that is substantially a L-shape or a T-shape or a V-shape or a U-shape.

In an embodiment, the die may comprise of one or more subsequent die sections in the length direction of the reinforcement profile, wherein each die section may be controlled and adjusted for temperature and die cross-sectional geometry, separately. The die may further have a flexible surface with solid adjustable back frame.

The step of varying the die cross-sectional geometry of the heated die may be an automated step, wherein the die cross-sectional geometry is controlled by a controller and the variable profile cross-sectional geometry of the reinforcement profile is preprogrammed. In other embodiments, the die cross-sectional geometry of the heated die may be manually controlled during manufacturing of the reinforcement profile.

In some embodiments, the two or more fabric layers are passed through the heated die by pulling the two or more fabric layers through the heated die by means of a pulling system, thereby providing a pultrusion process for manufacturing reinforcement profiles with variable profile cross-sectional geometry.

In an embodiment, the method may further comprise a step of cutting the manufactured continuous reinforcement profile in a length after the reinforcement profile exits the heated die, thereby cutting the continuous reinforcement profile in a desired length suitable for the intended application, such as a length substantially equal to a structure to be reinforced.

In an embodiment, the method comprises a step of passing a section of the two or more fabric layers through a preforming die prior to the heated die, the preforming die having a pre-determined cross-sectional geometry pre-shaping the section of the two or more fabric layers to a pre-determined fabric cross-sectional geometry, thereby pre-shaping the two or more fabric layers into the correct shape for easier loading into the heated die.

In an aspect of the invention, the step of passing is a step of continuously passing the two or more fabric layers through the heated die, and the step of varying is a step of varying the die cross-sectional geometry while continuously passing the two or more fabric layers through the heated die.

The method is thus a continuous process, wherein the two or more fabric layers are constantly passed through the heated die without stopping, thereby continuously producing the reinforcement profile. This streamlines the manufacturing process compared to a stepwise production (see below), where the two or more fabric layers are stopped and maintain in the heated die for a period of time, because less process steps are needed. The continuous process further reduces processing time.

The heated die may constantly apply heat to the two or more fabric layers while continuously passing the two or more fabric layers with polymer through the heated die, thereby continuously consolidating the two or more fabric layers into a reinforcement profile.

Furthermore, the die cross-sectional geometry may gradually be varied while the two or more fabric layers are continuously passed through the heated die to gradually vary the profile cross-sectional geometry of the reinforcement profile along the reinforcement profile.

A continuous production process may be advantageous for the production of reinforcement profiles with profile cross-sectional geometries with smooth gradual changes in the profile cross-sectional geometry along the reinforcement profile.

In another aspect of the invention, the step of passing is a step of stepwise passing the two or more fabric layers through the heated die, and the step of varying is a step of varying the die cross-sectional geometry before consolidating the two or more fabric layers and polymer in the heated die.

The method is thus a semi-continuous process, wherein the two or more fabric layers are passed through the heated die in steps, where a part of the two or more fabric layers encompassed by the heated die is retained in the heated die for period of time. Thereby heating a part of the two or more fabric layers at the time to consolidate the two or more fabric layers and polymer into a reinforcement profile. This enables that the two or more fabric layers with polymer can be passed through the heated die with a higher fabric speed compared to the continuous process.

The die cross-sectional geometry may be varied during passing of the two or more fabric layers through the heated die or while a part of the two or more fabric layers are retained in the heated die before applying heat to consolidate the two or more endless fabric layers and polymer into a reinforcement profile, thereby gradually varying the profile cross-sectional geometry of the reinforcement profile along the reinforcement profile.

The heated die may periodically apply heat to the two or more fabric layers with polymer, thereby only applying heat for the period of time in which a part of the two or more fabric layer is retained in the heated die, thereby allowing the die cross-sectional geometry to be varied while the two or more fabric layers are retained in the heated die, thereby stepwise consolidating the two or more fabric layers and polymer into a reinforcement profile. The heated die may also constantly apply heat to the two or more fabric layers.

A semi-continuous production process may be advantageous for the production of reinforcement profiles with complex profile cross-sectional geometries with substantial and abrupt changes in the profile cross-sectional geometry along the reinforcement profile.

In an embodiment, the die may comprise of one or more subsequent die sections in the length direction of the reinforcement profile, wherein each die section may be controlled and adjusted for temperature and die cross-sectional geometry, separately. This is especially advantageous for the semi-continuous process.

In an aspect of the invention, the step of varying is a step of varying the die cross-sectional geometry by displacing a first die member and a second die member relative to each other about a rotational axis, wherein the first die member and the second die member are rotatably connected.

The rotational axis may be substantially parallel to the reinforcement profile.

By displacing a first die member and a second die member relative to each other, the step of varying the die cross-sectional geometry of the heated die may be a step of varying an angle between the first die member and the second die member.

The first die member and second die member may be displaced with 1 to 45 degrees per meter or 1 to 25 degrees per meter or 1 to 10 degrees per meter relative to each other, thereby providing reinforcement profiles with variable profile cross-sectional geometry by gradually varying the angle between the first and second die member.

In some embodiments, the first die member is a fixed die member and the second die member is a flexible die member, where the second die member is displaced relative to the first die member about the rotational axis.

The flexible die member may be displaced with 1 to 45 degrees per meter or 1 to 25 degrees per meter or 1 to 10 degrees per meter relative to the fixed die member.

In an embodiment, the first die member and second die member are plates, wherein the plate may be flat or curved.

In another embodiment, the die may comprise of one or more subsequent die sections in the length direction of the reinforcement profile, wherein each die section may be controlled and adjusted for temperature and angle, separately. The first die member and second die member may further comprise a flexible surface with solid adjustable back frame.

In an aspect of the invention, the first die member and the second die members are substantially perpendicular or substantially parallel, thereby providing a reinforcement profile that is substantially flat, L-shaped, T-shaped, U-shaped, or V-shaped.

In an aspect of the invention, the method comprises a step of passing the two or more fabric layers through a polymer feed module prior to passing through the heated die, each of the two or more fabric layers comprising a first surface and a second surface, wherein the polymer is applied on the first surface and/or the second surface of the two or more fabric layers in the polymer feed module, thereby impregnating the one or more fabric layers with a polymer.

In some embodiments, the fabric layers may be off-the-shelf fabrics supplied with a polymer already applied to it, wherein the polymer feed module applies an additional polymer to the first surface and/or second surface of fabric layers, thereby strengthening and improving the consolidation of the two or more fabric layers and polymer.

The polymer feed module may be configured for spraying polymer onto the first surface and/or second surface of the two or more fabric layers to obtain an even distribution of polymer on the fabric surface. Thereby reducing the amount of polymer needed for consolidating the two or more fabric layers and polymer.

In an aspect of the invention, polymer is applied to the first surface and/or the second surface between adjacent fabric layers in the polymer feed module, thereby excluding the very bottom surface and top surface of the two or more fabric layers from being impregnated with a polymer. This is advantageous as it prevents the two or more fabric layers with polymer from adhering to the heated die during consolidation.

In an aspect of the invention, the variable profile cross-sectional geometry of the reinforcement profile is substantially a L-shape or a T-shape or a V-shape or a U-shape, thereby providing reinforcement profiles with profile cross-sectional geometries suitable for various purposes and applications.

In an aspect of the invention, the reinforcement profiles are assembly flanges for connecting a shear-web and/or a foot section for a shear web and/or a glue catcher for a wind turbine blade and/or a profile for a flatback of a wind turbine blade and/or a profile for a merging area of two wind turbine blade halves.

The method enables the production of reinforcement profiles for various applications in the manufacturing of wind turbine blades.

With the present invention it is possible to manufacture reinforcement profiles such as assembly flanges, foot sections, glue catcher etc. in one piece, which matches the non-uniform cross-sectional geometry along the wind turbine blade of wind turbine blades, thereby decreasing process time, cost, and waste material, which overall reduces the process time and cost of a wind turbine blade.

Providing reinforcement profiles for the flatback of a wind turbine blade has previously been particularly difficult and time consuming, with one usually performing a glass layup on the flatback and applying spray adhesive after each layer or prefabricating the section in a separate mould, where the vertical side of the flatback can be tilted. However, with the present invention it is possible to provide reinforcement profiles for the flatback with a pultrusion method because the method of the present invention can provide continuous reinforcement profiles with variable profile cross-sectional geometry.

In some embodiments, a vacuum infusion of the reinforcement profile is run after assembly in the wind turbine blade mould. This advantageous, as the vacuum infusion of the reinforcement profile can be run with the vacuum infusion of the wind turbine blade mould.

In other embodiments a vacuum infusion of the reinforcement profile is run before assembly in the wind turbine blade mould.

Another objective of the invention is achieved by an apparatus for manufacturing reinforcement profiles having variable profile cross-sectional geometry, the apparatus comprising:
- a heated die having a die cross-sectional geometry, the heated die comprising
   - an die geometry adjustment system, and
   - a heating system;
- a pulling system for passing two or more fabric layers with a polymer through the heated die to consolidate the two or more fabric layers and polymer into a reinforcement profile having a profile cross-sectional geometry, wherein the heating system applies heat to consolidate the two or more fabric layers and polymer, and the die geometry adjustment system varies the die cross-sectional geometry to vary the profile reinforcement cross-sectional geometry along the reinforcement profile.

The apparatus enables that the cross-sectional geometry of the reinforcement profiles can be changed during production, and thereby, enabling the production of continuous reinforcement profiles that matches the geometry of non-uniform structures.

This is advantageous as the apparatus circumvents the need for manufacturing the reinforcement profiles in modules with different constant cross-section geometries in order to match the geometry of a non-uniform structure to be reinforced. The modular manufacture of reinforcement profiles is expensive, time consuming, inefficient, and unsustainable, because the modules must be produced one at the time and subsequently assembled manually to a complete reinforcement profile, which generates a lot of waste material. In comparison the apparatus of the present invention enables cost effective, fast, efficient, and sustainable production, as the complete reinforcement profile can be produced in one continuous piece during one production run and directly mounted on a structure to be reinforced, which generates less waste material.

The heated die may encompass a part of the two or more fabric layers at a time. Thereby, the heating system applies heat to a part of the two or more fabric layers at the time to consolidate the two or more fabric layers and polymer into a reinforcement profile.

The heating system heats the two or more fabric layers to consolidate the two or more fabric layers and polymer into a reinforcement profile, thereby at least partially melting and/or polymerizing the polymer to unite the two or more fabric layers and polymer into one reinforced material. The consolidation of the two or more fabric layers and polymer, thus, provide a reinforcement profile with a stiffness that is high enough for the reinforcement profile to maintain its shape and preferably for running a vacuum infusion of the reinforcement profile without the need of a mould.

The heating system may heat the two or more fabric layers and polymer to a temperature of 70-180°C or 80-120°C or 90-110°C or preferably about 100°C but is not limited to these temperatures. The temperature required for consolidating the two or more fabric layers and polymer depends on the type of polymer, the amount of polymer, the number of fabric layers, and the fabric speed. The temperature should be sufficient for at least partially melting and/or polymerizing the polymer.

The heated die may further be configured for compressing the two or more fabric layers and polymer to a thickness. The thickness may be 1-10 mm or 2-8 mm or 2-7 mm or 2-6 mm.

The pulling system may pass the two or more fabric layers continuously through the heated die without stopping or stepwise through the heated die, where the two or more fabric layers are retained in the heated die for a period of time.

The pulling system may be configured for passing the two or more fabric layers through the heated die at a fabric speed of 0.2 to 5 meter per minutes or 0.3 to 2 meter per minute or 0.4 to 1 meter per minute.

The pulling system may further be configured for passing 2 to 12 fabric layers, preferably 2 to 8 fabric layers, and more preferably 2 to 6 fabric layers. The number of fabric layers depend on the fabric material and polymer and should be chosen such that a stable reinforcement profile with the required stiffness and strength for either ready-to-use reinforcement profiles or running a subsequent vacuum infusion.

In an embodiment, the die may comprise of one or more subsequent die sections, wherein each die section may comprise a die geometry adjustment system and a heating system. Each die section may be controlled and adjusted for temperature and die cross-sectional geometry, separately. This is especially advantageous for the semi-continuous process.

In another embodiment, the die may further have a flexible surface with solid adjustable back frame.

The fabric material of the two or more fabric layers may be glass, fibreglass, carbon, aramid, basalt, paper, wood, boron, asbestos, or any combination thereof. Preferably, the fabric material is glass or Carbon or a combination of these.

The fabric layers may be off-the-shelf fabrics supplied with a polymer; or the fabrics may be applied a polymer before passing through the heated die; or the fabric layers may be off-the-shelf fabrics supplied with a polymer and applied an additional polymer before passing through the heated die.

The polymer may be thermosetting polymers, thermoplastic polymers, adhesives, epoxy resin, vinyl ester, polyester thermosetting plastic, phenol formaldehyde resins, thermoplastic powder binder, thermoplastic resins or thermoplastic resin systems, or any combination thereof. Preferably the polymer is a thermoplastic powder binder and/or an adhesive and/or an epoxy resin.

The thermoplastic resin system may be Elium^{®}.

With the above-mentioned parameters, the apparatus can manufacture reinforcement profiles with different mechanical properties such as rigidity, strength, and elasticity, and thereby provide reinforcement profiles suitable for various applications.

The die geometry adjustment system may gradually vary the die cross-sectional geometry, thereby obtaining a reinforcement profile with a profile cross-sectional geometry that gradually varies along the reinforcement profile.

The die geometry adjustment system may be an automated system comprising a controller configured for varying the die cross-sectional geometry according to a pre-programmed die cross-sectional geometry for providing a variable profile cross-sectional geometry of the reinforcement profile. In other embodiments, the die geometry adjustment system may be manually controlled system, where the die cross-sectional geometry is manually varied during manufacturing of the reinforcement profile.

In an embodiment, the apparatus may further comprise a cutting system for cutting the manufactured continuous reinforcement profile in a length after the reinforcement profile exits the heated die, thereby cutting the continuous reinforcement profile in a desired length suitable for the intended application, such as a length substantially equal to a structure to be reinforced.

In an embodiment, the apparatus may further comprise a creel system for holding roles of the two or more fabric layers. The creel system provides an organized method for delivering the two or more fabric layers to the die, and further provides tension regulations of the two or more fabric layers such that the two or more fabric layers are passed through the apparatus with even tension.

The creel system may comprise a guiding system for guiding the two or more fabric layers.

In an aspect of the invention, the heated die comprises a first die member rotatably connected to a second die member in a rotatable connection defining a rotational axis, wherein the die geometry adjustment system displaces the first die member and/or the second die member about the rotational axis.

The rotational axis may be substantially parallel to the reinforcement profile.

By displacing a first die member and a second die member relative to each other, the die cross-sectional geometry of the heated die is varied by changing an angle between the first die member and the second die member, thereby providing reinforcement profiles with variable profile cross-sectional geometry by gradually varying the angle between the first and second die member.

The first die member and second die member may be displaced with 1 to 45 degrees per meter or 1 to 25 degrees per meter or 1 to 10 degrees per meter relative to each other.

In some embodiments, the first die member is fixed die member and the second die member is flexible die member, where the second die member is displaced relative to the first die member about the rotational axis.

The flexible die member may be displaced with 1 to 45 degrees per meter or 1 to 25 degrees per meter or 1 to 10 degrees per meter relative to the fixed die member.

In an embodiment, the first die member and second die member are plates, wherein the plate may be flat or curved.

In some embodiments, the die may comprise of one or more subsequent die sections, wherein each die section may be controlled and adjusted for temperature and angle, separately. In another embodiment, the first die member and second die member may further comprise a flexible surface with solid adjustable back frame.

In an aspect of the invention, the first die member and the second die member are substantially perpendicular or substantially parallel, thereby providing a reinforcement profile that are substantially flat, L-shaped, T-shaped, U-shaped, or V-shaped.

In an aspect of the invention, the apparatus comprises a polymer feed module before the heated die, the polymer feed module being configured for applying polymer to a first surface and/or a second surface of each of the two or more fabric layers.

The polymer feed module may be configured for spraying polymer onto the first surface and/or second surface of the two or more fabric layers to obtain an even distribution of polymer on the fabric surface, thereby reducing the amount of polymer needed for consolidating the two or more fabric layers and polymer.

The polymer feed module may be configured for applying 1 to 10% or 1 to 7% or preferably 1 to 5% polymer, thereby applying a sufficient amount of polymer to the two or more fabric layers for consolidating the two or more fabric layers and polymer to a stiffness that enables running a vacuum infusion of the reinforcement profile without the need of a mould.

In an aspect of the invention, the polymer feed module being configured for applying polymer to the first surface and/or the second surface between adjacent fabric layers.

Thereby the polymer feed module apply may polymer to all surfaces of the two or more fabric layers except from the very bottom surface and top surface of the two or more fabric layers. This is advantageous as it prevents the two or more fabric layers with polymer from adhering to the heated die during consolidation.

In an aspect of the invention, the apparatus comprises a preforming die arranged before the heated die, the preforming die having a pre-determined cross-sectional geometry for pre-shaping the two or more fabric layers to a pre-determined fabric cross-sectional geometry, thereby pre-shaping the two or more fabric layers into the correct shape for easier loading into the heated die.

In an aspect of the invention, the die cross-sectional geometry is substantially a L-shape or a T-shape or a V-shape or a U-shape.

The apparatus can thus provide reinforcement profiles with profile cross-sectional geometries that are substantially a L-shape or a T-shape or a V-shape or a U-shape. Thereby providing reinforcement profiles with profile cross-sectional geometries suitable for various purposes and applications.

### Description of the Drawing

Various examples are described hereinafter with reference to the figures. Like reference numerals refer to like elements throughout. Like elements will thus not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1A: illustrates an embodiment of an apparatus according to the present invention.
- Fig. 1B: illustrates a perspective view of an embodiment of an apparatus according to the present invention.
- Fig. 2A: illustrates a cross-section of an embodiment of a heated die.
- Fig. 2B: illustrates a cross-section of an embodiment of a heated die.
- Fig. 2C: illustrates a perspective view of an embodiment of a heated die.
- Fig. 2D: illustrates a perspective view of an embodiment of a heated die.
- Fig. 3A: illustrates a cross-section of an embodiment of a heated die.
- Fig. 3B: illustrates a cross-section of an embodiment of a heated die.
- Fig. 3C: illustrates a perspective view of an embodiment of a heated die.
- Fig. 3D: illustrates a perspective view of an embodiment of a heated die.
- Fig. 4: illustrates a perspective view of an embodiment of a heated die with different die cross-sectional geometries.
- Fig. 5A: illustrates a cross-section of a wind turbine blade with a glue catcher.
- Fig. 5B: illustrates a cross-section of a wind turbine blade with shear webs.
- Fig. 5C: illustrates a cross-section of a flatback of a wind turbine blade.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

The terminology used herein is for the purpose of describing particular examples only and is not intended to be limiting. As used herein, the terms "comprises", "comprising", "includes", and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

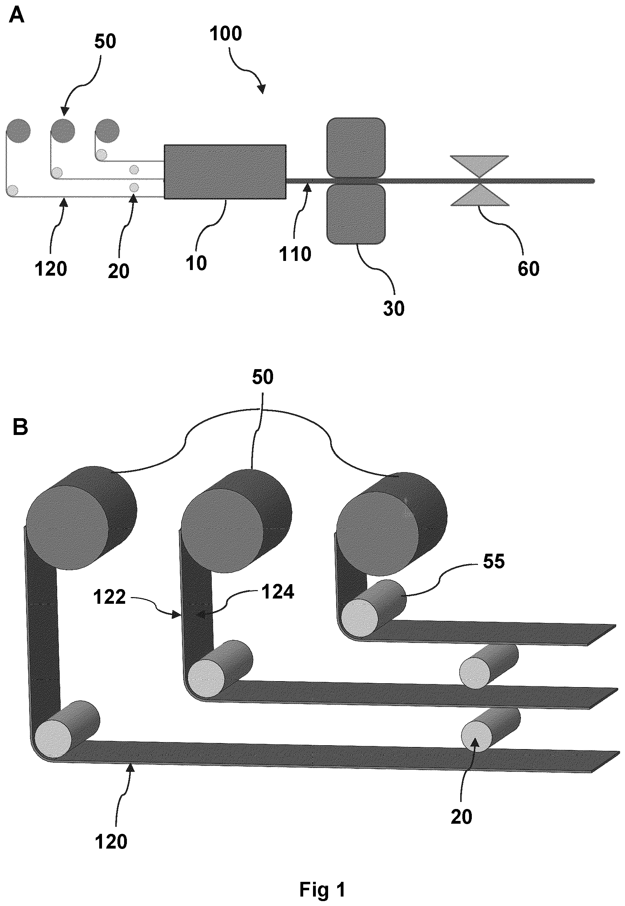

Figure 1A illustrates an embodiment of an apparatus 100 according to the present invention, where the apparatus 100 comprises a creel system 50 for holding roles of the two or more fabric layers 120 comprising a first surface 122 and a second surface 124. The creel system may comprise a guiding system 55 for guiding the two or more fabric layers 120. The creel system 50 delivers the two or more fabric layers 120 to a polymer feed module 20.

The polymer feed module 20 is configured for applying polymer to the first surface 122 and/or the second surface 124 of each of the two or more fabric layers 120.

The polymer feed module 20 may be configured for applying 1 to 10% or 1 to 7% or preferably 1 to 5% polymer to the two or more fabric layers 120.

In some embodiments, the polymer feed 20 module may be configured for spraying polymer onto the first surface 122 and/or second surface 124 of the two or more fabric layers 120 to obtain an even distribution of polymer on the fabric surface 120.

The fabric layers 120 may be off-the-shelf fabrics supplied with a polymer already applied to it, wherein the polymer feed module 20 applies an additional polymer to the first surface 122 and/or second surface 124 of the fabric layers 120, thereby strengthening and improving the consolidation of the two or more fabric layers 120 and polymer.

In an embodiment, the polymer feed module 20 may be configured for applying polymer to the first surface 122 and/or the second surface 124 between adjacent fabric layers 120. Thereby the polymer feed module 20 applies polymer to all surfaces of the two or more fabric layers 120 except from the very bottom surface and top surface of the two or more fabric layers 120. This is best illustrated in figure 1B showing a perspective view of the creel system 50 and a polymer feed module 20.

After the polymer feed module 20, the two or more fabric layers 120 with polymer is passed through a heated die 10 having a die cross-sectional geometry to consolidate the two or more fabric layers 120 and polymer into a reinforcement profile 110 having a profile cross-sectional geometry by means of a pulling system 30. The pulling system 30 may be configured for pulling the two or more fabric layers 120 arranged on rolls in the creel system 50 through the polymer feed module 20 and afterwards through the heated die 10.

The pulling system 30 may pass the two or more fabric layers 120 continuously through the heated die 10 without stopping or stepwise through the heated die 10 where the two or more fabric layers 120 are retained in the heated die 10 for a period of time.

The pulling system 30 may be configured for passing the two or more fabric layers 120 through the heated die 10 at a fabric speed of 0.2 to 5 meter per minutes or 0.3 to 2 meter per minute or 0.4 to 1 meter per minute. The pulling system may further be configured for passing 2 to 12 fabric layers, preferably 2 to 8 fabric layers, and more preferably 2 to 6 fabric layers. In figure 1A and 1B, an exemplary configuration of 3 fabric layers is illustrated. The number of fabric layers depend on the fabric material and polymer and should be chosen such that a stable reinforcement profile with the required stiffness and strength for either ready-to-use reinforcement profiles or running a subsequent vacuum infusion.

The heated die 10 comprises an die geometry adjustment system 17 and a heating system, where the heating system applies heat to consolidate the two or more fabric layers 120 and polymer.

The heated die 10 may encompass a part of the two or more fabric layers 120 at a time, where the heating system applies heat to consolidate the two or more fabric layers 120 and polymer into a reinforcement profile 110. Thereby, the heated die 10 at least partially melts and/or polymerizes the polymer to unite the two or more fabric layers 120 and polymer into one reinforced profile 110.

The heating system may heat the two or more fabric layers 120 and polymer to a temperature of 70-180°C or 80-120°C or 90-110°C or preferably about 100°C but is not limited to these temperatures. The temperature required for consolidating the two or more fabric layers 120 and polymer depends on the type of polymer, the amount of polymer, the number of fabric layers, and the fabric speed. The temperature should be sufficient for at least partially melting and/or polymerizing the polymer.

The die cross-sectional geometry of the heated die 10 may be substantially flat or a L-shape or a T-shape or a V-shape or a U-shape.

The heated die 10 may further be configured for compressing the two or more fabric layers 120 and polymer to a thickness. The thickness may be 1-10 mm or 2-8 mm or 2-7 mm or 2-6 mm.

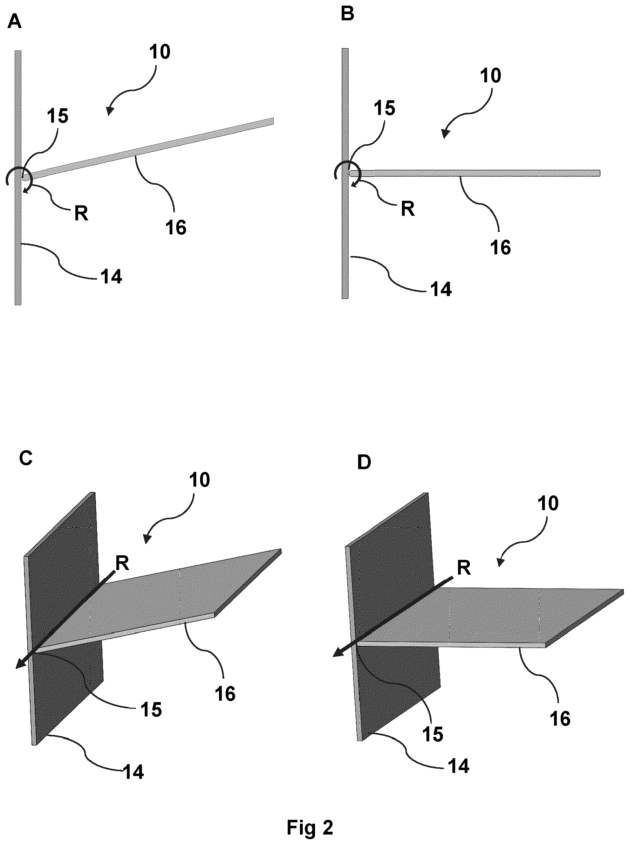

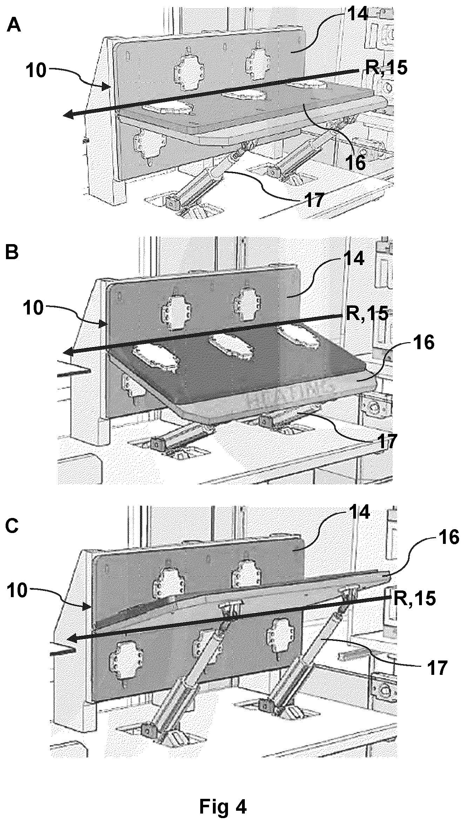

The die geometry adjustment system 17 varies the die cross-sectional geometry to vary the profile reinforcement cross-sectional geometry along the reinforcement profile 110. The die geometry adjustment system 17 may gradually vary the die cross-sectional geometry, thereby obtaining a reinforcement profile 110 with a profile cross-sectional geometry that gradually varies along the reinforcement profile 110. Figures 2 to 4 illustrates a perspective view of an embodiment of the heated die 10 with different die cross-sectional geometries, wherein the die adjustment system is best seen in figure 4.

The heated die 10 may further comprise a first die member 14 rotatably connected to a second die member 16 in a rotatable connection 15 defining a rotational axis R, wherein the die geometry adjustment system displaces 17 the first die member 14 and/or the second die member 16 about the rotational axis R.

The rotational axis R may be substantially parallel to the reinforcement profile 110.

By displacing a first die member 14 and a second die member 16 relative to each other, the die cross-sectional geometry of the heated die 10 is varied by changing an angle between the first die member 14 and the second die member 16. Thereby providing reinforcement profiles 110 with variable profile cross-sectional geometry by gradually varying the angle between the first and second die member 14, 16.

The first die member 14 and second die member 16 may be displaced with 1 to 45 degrees per meter or 1 to 25 degrees per meter or 1 to 10 degrees per meter relative to each other.

The first die member 14 and the second die member 16 may be substantially perpendicular, as illustrated in figure 2. Figure 2A and 2B illustrates a cross-section of a heated die 10, where in figure 2B the second die member 16 is perpendicular to the first die member 14, thereby having a T-shaped die cross-sectional geometry, and where in figure 2A, the second die member 16 is displaced relative to the first die member 14 about the rotation axis R, thereby slightly changing the die cross-sectional geometry. Figure 2C and 2D illustrates a perspective view of the heated die in figures 2A and 2B.

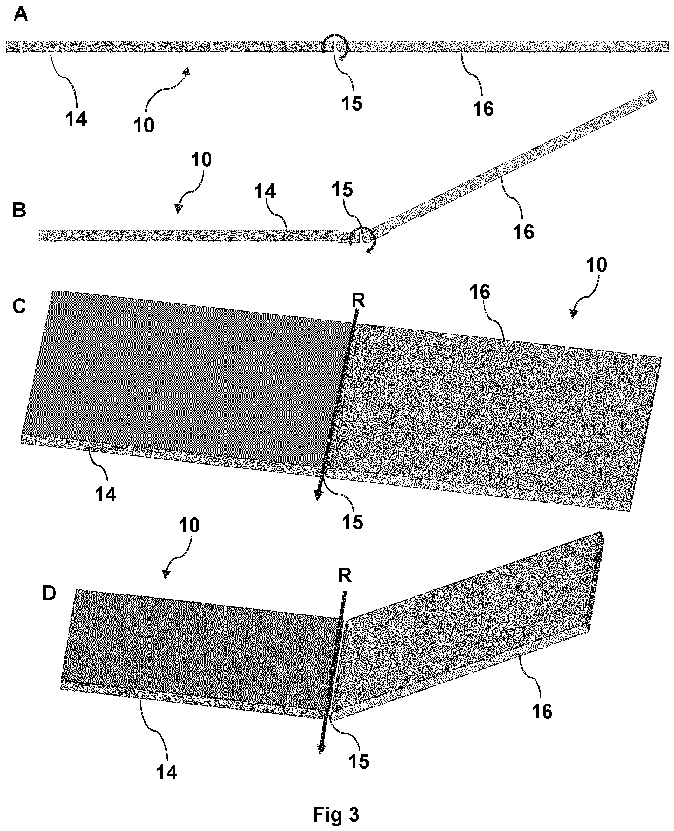

The first die member 14 and the second die member 16 may be substantially parallel, as illustrated in figure 3. Figure 3A and 3B illustrates a cross-section of a heated die 10, where in figure 3A the second die member 16 is parallel to the first die member 14, thereby having a flat die cross-sectional geometry, and where in figure 3B, the second die member 16 is displaced relative to the first die member 14 about the rotation axis R, thereby slightly changing the die cross-sectional geometry to a L-shape or V-shape. Figure 3C and 3D illustrates a perspective view of the heated die in figures 3A and 3B.

In some embodiments, the first die member 14 and second die member 16 are plates, wherein the plate may be flat or curved.

By the first die member 14 and the second die member 16 being substantially perpendicular or substantially parallel it is possible to provide reinforcement profiles that are substantially flat, L-shaped, T-shaped, U-shaped, or V-shaped.

In an embodiment of the heated die 10, the first die member 14 may be a fixed die member and the second die member 16 may be a flexible die member, where the second die member is 16 is displaced relative to the first die member 14 about the rotational axis R by the die geometry adjustment system 17. Figure 4 illustrates a perspective view of such an embodiment of the heated die 10, where the second die member 16 is displaced to three different positions (fig. 4A-4C) about the rotational axis R by the die geometry adjustment system 17.

The flexible die member 16 may be displaced with 1 to 45 degrees per meter or 1 to 25 degrees per meter or 1 to 10 degrees per meter relative to the fixed die member 14.

Returning to figure 1A, the apparatus 100 may further comprise a cutting system 60 for cutting the manufactured continuous reinforcement profile 110 exiting the heated die 10 in a length. Thereby cutting the continuous reinforcement profile 110 in a desired length suitable for the intended application, such as a length substantially equal to a structure to be reinforced.

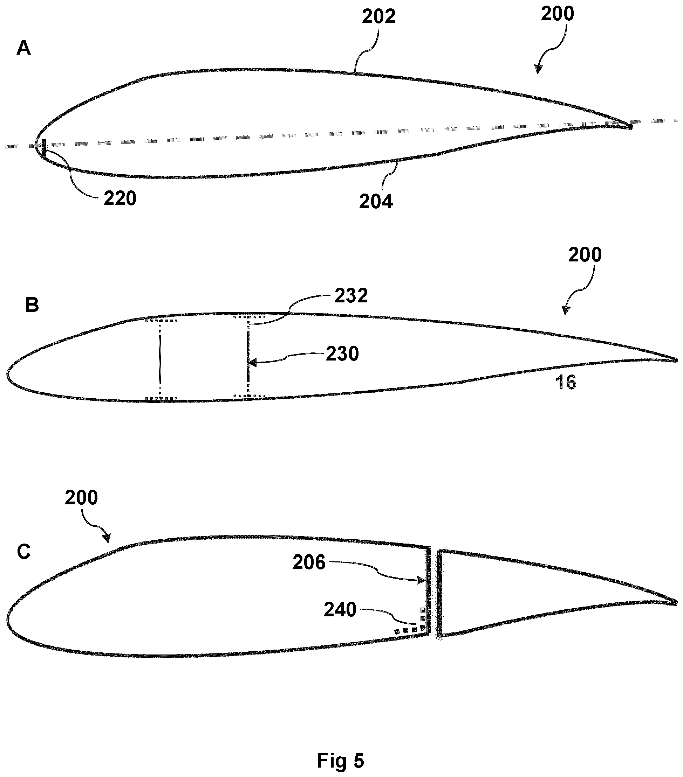

The reinforcement profiles 110 may be glue catchers 220 for wind turbine blades 200, as illustrated in figure 5A. During wind turbine blade 200 assembly glue is applied to joining edges of a first blade mould half 202 and a second blade mould half 204 before assembling the two blade mould halves 202, 204. A glue catcher and reinforcement attached to the bottom blade mould half 202 near the joint can catch the excess glue, thereby preventing the glue from flowing to the bottom of the blade mould half 202.

The reinforcement profiles 110 may further be foot sections 232 for a shear web 230 or assembly flanges for connecting a shear-web 230 of wind turbine blade 200, see figure 5B. The foot section 232 may have a substantially T-shaped or L-shaped cross-sectional geometry.

The reinforcement profiles 110 may further be a profile 240 for a flatback 206 of a wind turbine blade 200, as illustrated in figure 5C. Providing reinforcement profiles 110 for the flatback 206 of a wind turbine blade 200 has previously been particularly difficult and time consuming due to its complex cross-sectional geometry. However, with the present invention it is possible to provide reinforcement profiles 240, 110 for the flatback 206 because the method and apparatus 100 of the present invention can provide continuous reinforcement profiles 110, 240 with variable profile cross-sectional geometry.

The reinforcement profiles 110 may further be a profile for a merging area of two wind turbine blade mould halves 202, 206.

| **Item** | **No.** |
|---|---|
| Heated die | 10 |
| First die member | 14 |
| Rotatable connection | 15 |
| Second die member | 16 |
| Die geometry adjustment system | 17 |
| Polymer feed module | 20 |
| Pulling system | 30 |
| Creel system | 50 |
| Guiding system | 55 |
| Cutting system | 60 |
| Apparatus | 100 |
| Reinforcement profiles | 110 |
| Fabric layer | 120 |
| First surface | 122 |
| Second surface | 124 |
| Rotational axis | R |
| Wind turbine blade | 200 |
| First blade mould half | 202 |
| Second blade mould half | 204 |
| Flatback | 206 |
| Spar cap | 210 |
| Glue catcher | 220 |
| Shear web | 230 |
| Foot section | 232 |
| Profile for flatback | 240 |

## Claims

1. Method for manufacturing reinforcement profiles (110) having variable profile cross-sectional geometry (112), the method comprises a step of:
- passing two or more fabric layers (120) with a polymer through a heated die (10) to consolidate the two or more fabric layers (120) and polymer into a reinforcement profile (110), the heated die (10) having a die cross-sectional geometry (12) providing the reinforcement profile (110) with a profile cross-sectional geometry (112); and
- varying the die cross-sectional geometry (12) to vary the profile cross-sectional geometry (112) along the reinforcement profile (110).

2. A method according to claim 1, wherein the step of passing is a step of continuously passing the two or more fabric layers (120) through the heated die (10), and the step of varying is a step of varying the die cross-sectional geometry (12) while continuously passing the two or more fabric layers (120) through the heated die (10); or wherein the step of passing is a step of stepwise passing the two or more fabric layers (120) through the heated die (10), and the step of varying is a step of varying the die cross-sectional geometry (12) before consolidating the two or more fabric layers (120) and polymer in the heated die (10).

3. A method according to claims 1 or 2, wherein the step of varying is a step of varying the die cross-sectional geometry (12) by displacing a first die member (14) and a second die member (16) relative to each other about a rotational axis (R), wherein the first die member (14) and the second die member (16) are rotatably connected.

4. A method according to claim 3, wherein the first die member (14) and the second die member (16) are substantially perpendicular or substantially parallel.

5. A method according to any one of the preceding claims, wherein the method comprises a step of passing the two or more fabric layers (120) through a polymer feed module (20) prior to passing through the heated die (10), each of the two or more fabric layers (120) comprising a first surface (122) and a second surface (124), wherein the polymer is applied on the first surface (122) and/or the second surface (124) of the two or more fabric layers (120) in the polymer feed module (20).

6. A method according to claim 5, wherein the polymer is applied on the first surface (122) and/or the second surface (124) between adjacent fabric layers (120) in the polymer feed module (20).

7. A method according to any of the preceding claims, wherein the variable profile cross-sectional geometry (112) of the reinforcement profile (110) is substantially a L-shape or a T-shape or a V-shape or a U-shape.

8. A method according to any one of the preceding claims, wherein the reinforcement profiles (110) are assembly flanges for connecting a shear-web and/or a foot section for a shear web and/or a glue catcher for a wind turbine blade and/or a profile for a flatback of a wind turbine blade and/or a profile for a merging area of two wind turbine blade halves.

9. An apparatus (100) for manufacturing reinforcement profiles (110) having variable profile cross-sectional geometry (112), the apparatus (100) comprising:
- a heated die (10) having a die cross-sectional geometry (12), the heated die comprising
- an die geometry adjustment system (17), and
- a heating system (18);
- a pulling system (30) for passing two or more fabric layers (120) with a polymer through the heated die (10) to consolidate the two or more fabric layers (120) and polymer into a reinforcement profile (110) having a profile cross-sectional geometry (112), wherein the heating system (18) applies heat to consolidate the two or more fabric layers (120) and polymer, and the die geometry adjustment system (17) varies the die cross-sectional geometry (12) to vary the profile reinforcement cross-sectional geometry (112) along the reinforcement profile (110).

10. An apparatus (100) according to claim 11, wherein the heated die (10) comprises a first die member (14) rotatably connected to a second die member (16) in a rotatable connection (15) defining a rotational axis (R), wherein the die geometry adjustment system (17) displaces the first die member (14) and/or the second die member (16) about the rotational axis (A).

11. An apparatus (100) according to claim 12, wherein the first die member (14) and the second die member (16) are substantially perpendicular or substantially parallel.

12. An apparatus (100) according to any of the preceding claims, wherein the apparatus (100) comprises a polymer feed module (20) before the heated die (10), the polymer feed module (20) being configured for applying the polymer to a first surface (122) and/or a second surface (124) of each of the two or more fabric layers (120).

13. An apparatus (100) according to claim 12, wherein the polymer feed module (20) is configured for applying the polymer to the first surface (122) and/or the second surface (124) between adjacent fabric layers (120).

14. An apparatus (100) according to any one of the preceding claims, wherein the apparatus (100) comprises a preforming die (40) arranged before the heated die (10), the preforming die (40) having a pre-determined cross-sectional geometry for pre-shaping the two or more fabric layers (120) to a pre-determined fabric cross-sectional geometry.

15. An apparatus (100) according to any of the preceding claims, wherein the die cross-sectional geometry (12) is substantially a L-shape or a T-shape or a V-shape or a U-shape.
